# EUROPÄISCHE PATENTSCHRIFT

(11) **EP 0 844 145 B1**
(45) Veröffentlichungstag und Bekanntmachung des Hinweises auf die Patenterteilung: **11.09.2002**
(21) Anmeldenummer: 97119300.8
(22) Anmeldetag: 05.11.1997
(51) Int. Cl.: B60R 21/22

(54) **Seitenairbagmodul**
Side air bag module
Module de sac gonflable latéral.

(30) Priorität: 13.11.1996 DE 19646817
(43) Veröffentlichungstag der Anmeldung: 27.05.1998
(73) Patentinhaber: ADAM OPEL AG, 65423 Rüsselsheim (DE)
(72) Erfinder: Klenk, Jürgen, Dipl.-Ing., 65468 Trebur (DE); Hofmann, Peter, Dipl.-Ing., 65520 Bad Camberg (DE)
(74) Vertreter: Kümpfel, Heinz, Dipl.-Ing.

(56) Entgegenhaltungen:
- WO-A-96/30234
- DE-A- 4 119 788
- DE-C- 19 528 627
- DE-U- 29 510 608
- GB-A- 2 296 476
- PATENT ABSTRACTS OF JAPAN vol. 1998, no. 01, 30. Januar 1998 (1998-01-30) & JP 09 240413 A (TACHI S CO LTD), 16. September 1997 (1997-09-16)
- PATENT ABSTRACTS OF JAPAN vol. 1997, no. 04, 30. April 1997 (1997-04-30) & JP 08 324372 A (TACHI S CO LTD), 10. Dezember 1996 (1996-12-10)

## Beschreibung

Die Erfindung betrifft ein insbesondere an einem Fahrzeugsitz angeordnetes Seitenairbagmodul nach dem Oberbegriff des Patentanspruches 1.

Ein derartiges Seitenairbagmodul ist mit DE-U 295 10 608 beschrieben. Bei diesem ist das starre Abdeckteil fest mit dem Airbagmodul verbunden. Der Schusskanal ist damit in seinem Querschnitt festgelegt, und er erfordert so einen Mindestraum, der zur Sicherung einer störungsfreien Entfaltung des Luftsackes nicht unterschritten werden kann. Dieser Mindestraum wird auch bei nicht aktiviertem Airbag ständig durch den Schusskanal eingenommen und kann für andere Zwecke im Fahrzeug nicht genutzt werden.

In einem Fahrzeug ist jedoch der Raum zwischen dem Sitzkorpus und der jeweiligen benachbarten Seitenwand knapp bemessen. Er muss jedoch so groß sein, um seitlich am Sitzkorpus befindliche Einstellelemente, z. B. eine Sitzlehnenverstellung, mit der Hand betätigen zu können. Es ist somit ein Kompromiss zu treffen, nachdem der Schusskanal des Seitenairbagmoduls zwar einen noch ausreichenden Querschnitt aufweist, gleichzeitig aber auch die Betätigungselemente an der Sitzseite erreichbar bleiben. Nach einem solchen Kompromiss muss der Schusskanal insbesondere bei kleineren Fahrzeugen so eingeengt werden, dass bei Aktivierung des Airbags erhebliche Kräfte durch den Luftsack auf die den Schusskanal umgebenden Teile ausgeübt werden. Diese Teile können dadurch verformt und eingeknickt werden, so dass ihre Gestaltfestigkeit reduziert wird. Dadurch kann das Sicherheitsverhalten des Fahrzeugaufbaus bei einem Crash negativ beeinflusst werden.

Aus der GB-A-2 296 476 ist ein weiteres Seitenairbagmodul der genannten Art bekannt, bei dem ein scharnierartig mit dem Seitenairbagmodul verbundenes Abdeckteil zur Halterung des im Ruhezustand befindlichen Luftsacks vorgesehen ist. Das Abdeckteil ist dabei derart elastisch ausgebildet, dass der sich aufblasende Luftsack durch elastische Verformung oder Verbiegung des Abdeckteils einen Schusskanal zum Austreten des Luftsacks bilden kann. Nachteilig bei dieser Lösung ist jedoch, dass im Falle der Einwirkung von seitlichen Strukturen des Fahrzeuges auf das Abdeckteil bei einem Seitencrash kein minimaler Querschnitt des Schusskanals zur Ausübung der Schutzwirkung des entfalteten Luftsacks erhalten bleibt.

Der Erfindung liegt somit die Aufgabe zugrunde, ein Seitenairbagmodul der eingangs genannten so zu verbessern, dass der Schusskanal bei Aktivierung des Airbags einen wesentlich größeren Querschnitt als bei bekannten Ausführungen aufweisen kann und gleichzeitig ausreichend Raum zwischen dem das Seitenairbagmodul tragenden Korpus und einem gegenüberliegenden Fahrzeugteil, also z. B. dem zur Betätigung von Sitzeinstellelementen erforderlichen Raum zwischen einem Sitz und der Fahrzeugseitenwand, verbleibt.

Erfindungsgemäß wird diese Aufgabe mit den Merkmalen des Anspruches 1 gelöst. Vorteilhafte Weiterbildungen der Erfindung sind Gegenstand der Unteransprüche. Ein so ausgebildetes Seitenairbagmodul kann mit einem Minimum an seitlicher Raumausdehnung ausgeführt werden, da im Ruhezustand der Schusskanal lediglich einen minimalen zur Ausübung der Schutzwirkung des entfalteten Luftsacks ausreichenden Querschnitt aufweisen muss. Dieser minimale Querschnitt ist so bemessen, dass bei seitlichem Eindringen von Strukturen während eines Crashs der entfaltete Luftsack nicht abgequetscht wird. Gesichert wird dies durch den Anschlag für das Abdeckteil in seinem Ruhezustand.

Zwischen dem am Fahrzeugsitz befindlichen Abdeckteil und der Fahrzeugseitenwand verbleibt so ausreichend Raum zur Handhabung von Sitzeinstellelementen oder dergleichen.

Bei Aktivierung des Airbags wird der Druck des sich entfaltenden Luftsackes das Abdeckteil um die scharnierartig angelenkte Seite bis zu einem Anschlag schwenken, wobei der Querschnitt des Schusskanals auf einen optimalen eine störungsfreie Entfaltung des Luftsacks ermöglichenden Querschnitt erweitert wird. Dabei wird der im Ruhezustand für die Betätigung von Sitzeinstellelementen oder dergleichen vorgesehene Raum zwar eingenommen. Dies ist jedoch unproblematisch. Der Luftsack kann sich in dem erweiterten Schusskanal gezielt und mit beherrschbaren Reaktionskräften entfalten, so dass eine ungewollte Deformation benachbarter Teile infolge einer Verdämmung des Luftsackes nicht eintritt.

Ein Ausführungsbeispiel der Erfindung ist nachstehend anhand einer Zeichnung näher beschrieben. Es zeigen
- Fig. 1:: den Rahmen einer Lehne eines Fahrzeugsitzes und ein in diesen Rahmen einsetzbares Seitenairbagmodul,
- Fig. 2:: einen schematisierten Teilschnitt entlang der Linie A-A in Figur 1;
- Fig. 3:: einen Schnitt parallel zum Schnitt nach Figur 2 im Bereich der Befestigung eines Abdeckteils des Seitenairbagmoduls.

Eine zu einem Sitzkorpus gehörende Lehne weist einen tragenden Rahmen 1 auf, der eine Polsterauflage 2 trägt und an dessen Seite eine Öffnung 3 eingebracht ist, in welche in Richtung des Pfeiles 4 ein Seitenairbagmodul 5 einsetzbar ist. Das Seitenairbagmodul 5 ist mit Schrauben fest am Rahmen 1 verbunden. Es weist einen Raum 6 zur Aufnahme eines Luftsackes auf. Dem Raum 6 schließt sich ein Schusskanal 7 an, der zur benachbarten Fahrzeugseite hin durch ein starres Abdeckteil 8 begrenzt ist. Der Schusskanal 7 hat eine im wesentlichen in Fahrtrichtung gerichtete Schusskanalöffnung 9. Das Abdeckteil 8 ist an seiner der Schusskanalöffnung 9 angewandten Seite 10 scharnierartig mit dem Seitenairbagmodul 5 verbunden und an seiner anderen Seite 11 mit einer Halterung 12 festgelegt. Die Halterung 12 weist eine Sollbruchstelle 13 auf. Am Abdeckteil 8 ist eine Versteifung 14 befestigt, die einen abstützenden Anschlag 15 sowie einen weiteren Anschlag 16 an einem Haken 17 trägt. Die Anschläge 16 und 17 kommen alternativ in Anlage an ein Gehäuseteil 18 des Seitenairbagmoduls 5, wobei der abstützende Anschlag 15 das Abdeckteil 8 in einer Lage fixiert, die einen minimalen zur Ausübung der Schutzwirkung des entfalteten Luftsacks ausreichenden Querschnitt des Schusskanals 7 ergibt. Bei Anlage des hakenartigen Anschlages 17 am Gehäuseteil 18 ist das Abdeckteil 8 in einer Lage fixiert, die einem optimalen eine störungsfreie Entfaltung des Luftsacks ermöglichenden Querschnitt des Schusskanals 7 entspricht.

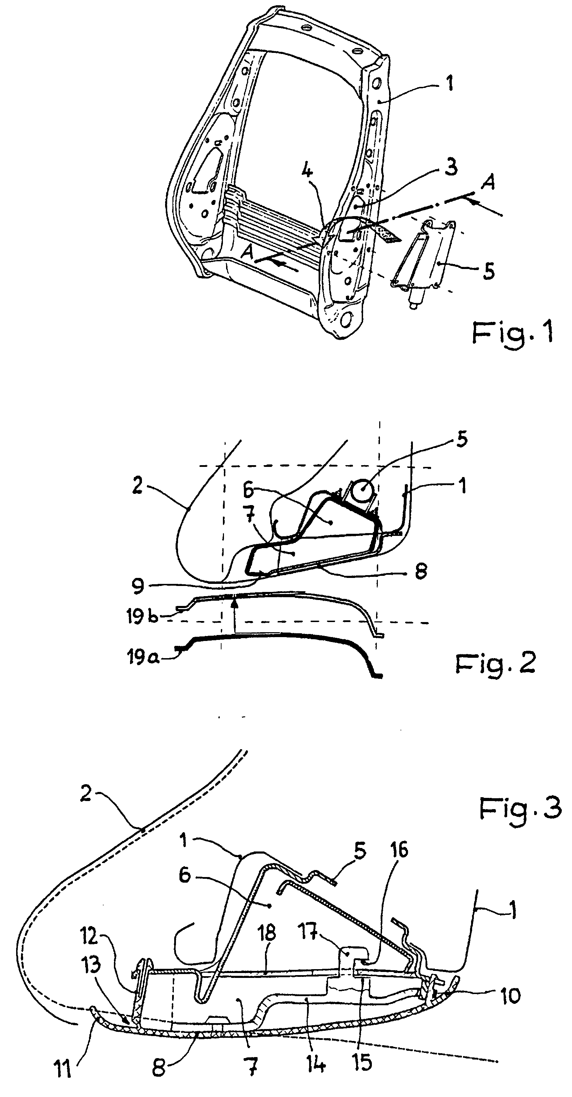

In Figur 2 ist die Kontur eines Türinnenteils in zwei Positionen 19a und 19b dargestellt. Die Position 19a nimmt das Türinnenteil im Normalfall ein. Es ist deutlich erkennbar, dass zwischen dem Abdeckteil 8 und dem Türinnenteil in Position 19a ausreichend Raum für die Unterbringung einer Handhabung ist.

Wird der Seitenairbag durch einen Seitencrash aktiviert, dann wird vor dem Eindringen von Strukturen in das Fahrzeuginnere der Luftsack aufgeblasen. Dabei wird das Abdeckteil 8 nach außen gedrückt, die Sollbruchstelle 13 reißt, das Abdeckteil 8 schwenkt um die scharnierartige Anlenkung an seiner rückwärtigen Seite 10 bis der hakenartige Anschlag 16 am Gehäuseteil 18 anliegt. In dieser Position weist der Schusskanal 7 einen optimalen Querschnitt auf. Der Luftsack kann sich ohne Dämmung durch entgegenstehende Teile schnell entfalten und seine Schutzfunktion ausüben. Treten im Verlauf des Crashs Strukturteile seitlich in das Fahrzeug ein, indem z. B. das Türinnenteil die Position 19b einnimmt, dann wird das Abdeckteil 8 zwar aus seiner Optimumlage zurückgedrückt, jedoch höchstens so weit, dass der abstützende Anschlag 15 am Gehäuseteil 18 anliegt; d. h. der minimale Querschnitt des Schusskanals 7 bleibt erhalten und der geöffnete Luftsack kann durch die eindringenden Strukturteile nicht abgeklemmt werden.

Die Erfindung ist nicht an das Ausführungsbeispiel gebunden. Sie ist ebenso bei einem in einer Seitenwand oder einer Tür eines Fahrzeuges angeordneten Seitenairbagmodul anwendbar, wobei sinngemäß die gleichen Merkmale wie für das beschriebene Beispiel einsetzbar sind und dabei auch die gleichen Vorteile eintreten.

## Patentansprüche

1. Seitenairbagmodul (5), das an einem Fahrzeugsitz angeordnet ist dessen im Korpus des Fahrzeuges, insbesondere des Sitzes, angeordneter gefalteter Luftsack von einem die äußere Korpusseite bildenden starren Abdeckteil (8) überdeckt ist, welches zusammen mit einem die innere korpusseite bildenden Gehäuseteil bei Aktivierung des Airbags einen in Fahrtrichtung ausgerichteten Schusskanal (7) zur gerichteten Entfaltung des Luftsackes bildet, wobei das starre Abdeckteil (8) an der der Schusskanalöffnung (9) abgewandten Seite (10) scharnierartig mit dem Seitenairbagmodul (5) verbunden und unter dem Druck des Luftsackes bei aktiviertem Airbag um einen begrenzten Winkel um die scharnierartig angebundene Seite (10) auf einen optimalen eine störungsfreie Entfaltung des Luftsackes ermöglichenden Querschnitt des Schusskanals (7) aufschwenkbar ist, **dadurch gekennzeichnet, dass** das starre Abdeckteil (8) zusammen mit einem die innere korpusseite bildenden Gehäuseteil bei aktiviertem Airbag einen Schusskanal (7) mit einem minimalen zur Ausübung der Schutzwirkung des entfalteten Luftsacks ausreichenden Querschnitt gewährleistet.

2. Seitenairbagmodul nach Anspruch 1, **dadurch gekennzeichnet, dass** das starre Abdeckteil (8) durch einen Anschlag (15) gegen eine Reduzierung des Querschnittes des Schusskanals (7) über den minimalen zur Ausübung der Schutzwirkung des entfalteten Luftsacks erforderlichen Querschnitt hinaus gesichert ist.

3. Seitenairbagmodul nach Anspruch 1 oder 2, **dadurch gekennzeichnet, dass** der Schwenkwinkel des starren Abdeckteils (8) für eine Vergrößerung des Querschnitts des Schusskanals (7) durch einen Anschlag (16) an einer den optimalen Querschnitt des Schusskanals (7) bildenden Stellung begrenzt ist.

## Claims

1. Side airbag module (5) which is arranged on a vehicle seat and of which the folded airbag, which is arranged in the body of the vehicle, in particular of the seat, is covered by a rigid cover portion (8) which forms the outer body side and which, together with a housing portion forming the inner body side, on activation of the airbag forms a firing channel (7) oriented in the direction of travel for directional unfolding of the airbag, wherein the rigid cover portion (8) is connected in hinge fashion to the side airbag module (5) on the side (10) facing away from the firing channel opening (9) and, under the pressure of the airbag when the airbag is activated, can be pivoted open through a limited angle about the hinged side (10) to an optimum cross-section of the firing channel (7) which allows trouble-free unfolding of the airbag, **characterised in that** the rigid cover portion (8) together with a housing portion forming the inner body side when the airbag is activated guarantees a firing channel (7) with a minimum cross-section sufficient to exercise the protective action of the unfolded airbag.

2. Side airbag module according to claim 1, **characterised in that** the rigid cover portion (8) is protected by a stop (15) against a reduction in cross-section of the firing channel (7) beyond the minimum cross-section required to exercise the protective action of the unfolded airbag.

3. Side airbag module according to claim 1 or 2, **characterised in that** the pivot angle of the rigid cover portion (8) for increasing the cross-section of the firing channel (7) is limited by a stop (16) at a position which forms the optimum cross-section of the firing channel (7).

## Revendications

1. Module de coussin gonflable latéral (5) disposé sur un siège de véhicule, dont la poche gonflable qui est logée pliée dans le corps du véhicule, en particulier dans le corps du siège, est recouverte par un élément formant couvercle (8), rigide, qui constitue la face extérieure du corps et qui, lors de l'activation du coussin gonflable, forme un canal d'expulsion (7) orienté dans la direction de déplacement pour le déploiement contrôlé de la poche gonflable, l'élément formant couvercle (8) rigide, du côté (10) éloigné de l'ouverture (9) du canal d'expulsion est lié par une liaison formant charnière au module de coussin gonflable (5) et, sous la pression du coussin gonflable, lorsque celui-ci est activé, s'ouvre en pivotant d'un angle limité autour du côté (10) lié à la manière d'une charnière pour libérer une section optimale du canal d'expulsion (7) permettant un déploiement sans problème de la poche gonflable, **caractérisé en ce que** l'élément formant couvercle (8) rigide, en coopération avec une partie de boîtier qui forme la face interne du corps, garantit un canal d'expulsion (7) avec une section minimale suffisante pour que s'exerce l'action protectrice de la poche gonflable, lorsque le coussin gonflable est activé.

2. Module de coussin gonflable latéral selon la revendication 1, **caractérisé en ce que** l'élément formant couvercle (8) rigide est retenu par une butée (15) empêchant une réduction de la section en-deçà de la section minimale nécessaire pour que s'exerce l'action protectrice de la poche gonflable déployée.

3. Module de coussin gonflable latéral selon la revendication 1 ou 2, **caractérisé en ce que** l'angle de pivotement de l'élément formant couvercle (8) rigide dans le sens d'une augmentation de la section du canal d'expulsion (7) est limité par une butée (16) dans une position qui correspond à la section optimale du canal d'expulsion (7).
